(19) Europäisches Patentamt / European Patent Office / Office européen des brevets

(11) **EP 3 650 327 B1**

(12) **EUROPÄISCHE PATENTSCHRIFT**

(45) Veröffentlichungstag und Bekanntmachung des Hinweises auf die Patenterteilung:
**17.06.2026  Patentblatt 2026/25**

(21) Anmeldenummer: **19197208.2**

(22) Anmeldetag: **13.09.2019**

(51) Internationale Patentklassifikation (IPC):
**B62M 6/45** *(2010.01)*    **B60L 15/20** *(2006.01)*

(52) Gemeinsame Patentklassifikation (CPC):
**B62M 6/45; B60L 15/20; B60L 15/2009; B60L 15/30; B60L 50/60; B62J 45/20; B62J 45/413; B62J 45/414; B62J 45/416;** B60L 2200/12; B60L 2250/26; Y02T 10/64; Y02T 10/70; Y02T 10/72

(54) **VERFAHREN ZUR STEUERUNG EINES ELEKTROMOTORS EINES ELEKTROFAHRRADS, STEUERGERÄT ZUR DURCHFÜHRUNG DES VERFAHRENS UND ELEKTROFAHRRAD MIT DEM STEUERGERÄT SOWIE EINGABEVERFAHREN UND MOBILE RECHENEINHEIT ZUR DURCHFÜHRUNG DES EINGABEVERFAHRENS**

METHOD FOR CONTROLLING AN ELECTRIC MOTOR OF AN ELECTRIC BICYCLE, CONTROL DEVICE FOR CARRYING OUT SAID METHOD AND ELECTRIC BICYCLE COMPRISING SAID CONTROL DEVICE AND INPUT METHOD AND MOBILE COMPUTING UNIT FOR CARRYING OUT SAID METHOD

PROCÉDÉ DE COMMANDE D'UN MOTEUR ÉLECTRIQUE D'UNE BICYCLETTE ÉLECTRIQUE, APPAREIL DE COMMANDE DESTINÉ À LA MISE EN ŒUVRE DUDIT PROCÉDÉ ET BICYCLETTE ÉLECTRIQUE DOTÉE DE L'APPAREIL DE COMMANDE AINSI QUE PROCÉDÉ D'ENTRÉE ET UNITÉ DE CALCUL MOBILE DESTINÉS À LA MISE EN ŒUVRE DU PROCÉDÉ D'ENTRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2018  DE 102018219298**

(43) Veröffentlichungstag der Anmeldung:
**13.05.2020  Patentblatt 2020/20**

(73) Patentinhaber: **Robert Bosch GmbH**
**70442 Stuttgart (DE)**

(72) Erfinder: **Koeder, Thilo**
**70839 Gerlingen (DE)**

(56) Entgegenhaltungen:
EP-A1- 1 295 785    WO-A1-2017/217936
CN-A- 107 040 895    CN-A- 108 628 308
DE-A1- 102016 200 377    DE-A1- 102016 216 747
DE-B3- 102017 206 569    FR-A1- 3 048 673
JP-A- 2001 199 378    US-A1- 2013 001 000
US-A1- 2016 176 472    US-A1- 2016 304 157
US-A1- 2017 364 995

**Beschreibung**

Die vorliegende Erfindung betrifft ein Verfahren zur Steuerung eines Elektromotors eines Elektrofahrrads und ein Steuergerät des Elektrofahrrads zur Durchführung des Verfahrens. Außerdem betrifft die Erfindung ein Elektrofahrrad mit diesem Steuergerät. Des Weiteren betrifft die Erfindung ein Eingabeverfahren zur Begrenzung mindestens einer Betriebsgröße eines Elektrofahrrads sowie eine mobile Recheneinheit, welche dazu eingerichtet ist, das Eingabeverfahren durchzuführen.

Stand der Technik

Die Steuerung eines Elektromotors eines Elektrofahrrads erfolgt gewöhnlich in Abhängigkeit einer erfassten Trittgröße beziehungsweise eines erfassten Fahrerdrehmoments beziehungsweise Tretdrehmoments des Fahrers und in Abhängigkeit eines ausgewählten, typischerweise konstanten Unterstützungsverhältnisses $\alpha$. Die Steuerung kann dabei vorteilhafterweise in Abhängigkeit einer gemittelten Trittgröße erfolgen, die Mittelung erfolgt beispielsweise in Abhängigkeit einer vorgegebenen Zeitspanne und/oder in Abhängigkeit einer vorgegebene Anzahl von Umdrehungen der Kurbelwelle des Elektrofahrrads. Die Auswahl des Unterstützungsverhältnisses a erfolgt durch eine Eingabe eines Nutzers an einem Eingabemittel eines Steuergeräts. Das Unterstützungsverhältnis $\alpha$ repräsentiert das durch eine Steuerung des Elektromotors zu erzeugende Verhältnis zwischen einem Motordrehmoment des Elektromotors und dem Fahrerdrehmoment gemäß Gleichung (1).

$$\alpha = \frac{M_{Motor}}{M_{Fahrer}} \qquad (1)$$

Ferner erfolgt in der Regel aufgrund gesetzlicher Regelungen eine motorische Unterstützung des Fahrers mittels des Elektromotors nur bis zu einer Geschwindigkeit des Elektrofahrrads von 25 km/h oder 45 km/h, wobei diese Geschwindigkeitsgrenze nicht von dem Fahrer angepasst werden kann. Das Dokument EP 1 295 785 A1 beschreibt ein Verfahren zur Steuerung eines Elektromotors eines Elektrofahrrads sowie eine entsprechend konfigurierte Steuereinheit.
Die Aufgabe der vorliegenden Erfindung ist es, eine Steuerung eines Elektrofahrrads zu verbessern, insbesondere für Kinder oder ältere Personen. Offenbarung der Erfindung
Die vorstehende Aufgabe wird gemäß der unabhängigen Ansprüche 1, 8, 9, 10 und 11 gelöst.
Die Erfindung betrifft ein Verfahren zur Steuerung eines Elektromotors eines Elektrofahrrads zur Erzeugung einer motorischen Unterstützungsleistung zum Antrieb des Elektrofahrrads. Zunächst wird eine Trittgröße des Fahrers erfasst, insbesondere ein Fahrerdrehmoment an einer Kurbelwelle des Elektrofahrrads. Anschließend wird eine Erfassung mindestens eines Begrenzungswertes zu einer Betriebsgröße des Elektrofahrrads durch eine Auswahleingabe des Fahrers oder einen Empfang eines Funksignals von einer mobilen Recheneinheit durchgeführt. Vorteilhafterweise ist vorgesehen, dass die Erfassung des Begrenzungswertes zusätzlich in Abhängigkeit eines Schließvorgangs mittels eines mechanischen Schlüssels oder in Abhängigkeit einer Passworteingabe erfolgt, so dass die Erfassung des Begrenzungswertes nur von autorisierten Personen durchgeführt werden kann. In einem nachfolgenden Schritt erfolgt eine Steuerung des Elektromotors in Abhängigkeit der erfassten Trittgröße, insbesondere des Fahrerdrehmoments, zur Erzeugung der Unterstützungsleistung. Die Steuerung des Elektromotors erfolgt vorteilhafterweise zusätzlich in Abhängigkeit eines von einem Fahrer vorgegebenen Unterstützungsverhältnisses, insbesondere gemäß Gleichung (1). Die Steuerung des Elektromotors wird ferner zusätzlich in Abhängigkeit des erfassten Begrenzungswertes durchgeführt, wobei die erzeugte Unterstützungsleistung beim Überschreiten des Begrenzungswertes begrenzt oder reduziert wird. Die Begrenzung oder Reduktion der erzeugten Unterstützungsleistung beim Überschreiten des Begrenzungswertes erfolgt insbesondere durch Anpassung des Unterstützungsverhältnisses oder eine vom Unterstützungsverhältnis unabhängige Steuerung des Elektromotors beim Überschreiten des Begrenzungswertes. Durch das Verfahren wird der Vorteil erzielt, dass die Unterstützungsleistung an eine Fahrfähigkeit des Fahrers angepasst werden kann. In einem Beispiel kann ein sichererer Betrieb eines motorisch unterstützten Kinderfahrrads für ein Kind resultieren, da die erzeugte Unterstützungsleistung beispielsweise in Abhängigkeit einer Entfernung zu einem Referenzort begrenzt oder reduziert wird.
In einer bevorzugten Ausführung der Erfindung erfolgt die Erfassung des Begrenzungswertes mittels einer Sensorvorrichtung, welche an dem Elektrofahrrad angeordnet ist. Die Sensorvorrichtung ist dazu eingerichtet, biometrische Daten des Fahrers zu erkennen und somit den Fahrer zu identifizieren. Alternativ ist die Sensorvorrichtung dazu eingerichtet, das Fahrverhalten des Fahrers, insbesondere eine Stabilität und/oder ein Bremsverhalten des Fahrers, zu erkennen und eine Fahrerkategorie zu identifizieren. Die Sensorvorrichtung weist zur Ermittlung des Fahrverhaltens bevorzugt Beschleunigungs- und/oder Drehratensensoren auf, insbesondere weist die Sensorvorrichtung eine inertiale Messeinheit auf, welche dazu eingerichtet sind, eine Drehung um die Längsachse des Elektrofahrrads beziehungsweise eine Kippbewegung des Elektrofahrrads in Richtung der Querachse des Elektrofahrrads zu erkennen. Vorteilhafterweise ist dem identifizierten Fahrer, dem erkannten Fahrverhalten und/oder der identifizierten Fahrerkategorie mindestens ein Begrenzungswert in einem elektronischen Speicher zugeordnet. Zusätzlich oder alternativ kann die Erfassung des Begrenzungswertes mittels eines mechanischen Stellgliedes am Elektrofahrrad erfolgen, beispielsweise mittels eines Stellhebels oder einer Stellschraube, wobei eine Einstellposition des Stellgliedes jeweils einen Begrenzungswert repräsentiert. Ferner kann es zusätzlich oder alternativ vorgesehen ein, die Erfassung des Begrenzungswertes mittels einer Eingabevorrichtung unmittelbar an einem Steuergerät des Elektrofahrrads durchzuführen. Die Eingabevorrichtung kann beispielsweise ein Taster des Steuergeräts oder ein Touchscreen sein. Durch die Erfassung des Begrenzungswertes am Elektrofahrrad kann diese unabhängig von einem weiteren Gerät durchgeführt werden, das heißt sie wird in manchen Situationen erleichtert.

Vorzugsweise repräsentiert der Begrenzungswert einen ersten Schwellenwert zu einer aktuellen Geschwindigkeit des Elektrofahrrads, wobei bei einer Überschreitung des ersten Schwellenwerts ein von einem Fahrer eingegebenes Unterstützungsverhältnis angepasst wird oder die Steuerung unabhängig vom Unterstützungsverhältnis erfolgt. Durch die Steuerung wird beispielsweise nach dem Überschreiten des ersten Schwellenwertes ein konstantes Motordrehmoment erzeugt. Durch diese Ausführung entsteht der Vorteil, dass beim Überschreiten des ersten Schwellenwertes trotz möglicherweise erzeugter Unterstützungsleistung eine überhöhte Geschwindigkeit des Elektrofahrrads erschwert wird.

In einer weiteren Ausgestaltung der Erfindung repräsentiert der Begrenzungswert einen zweiten Schwellenwert zu einer aktuellen Beschleunigung des Elektrofahrrads, wobei bei einer Überschreitung des zweiten Schwellenwerts ein von einem Fahrer eingegebenes Unterstützungsverhältnis angepasst wird oder die Steuerung unabhängig vom Unterstützungsverhältnis erfolgt. Durch die Steuerung wird beispielsweise nach dem Überschreiten des zweiten Schwellenwertes ein konstantes Motordrehmoment erzeugt. Durch diese Ausführung entsteht der Vorteil, dass beim Überschreiten des zweiten Schwellenwertes trotz möglicherweise erzeugter Unterstützungsleistung eine überhöhte Beschleunigungen des Elektrofahrrads erschwert wird.

Erfindungsgemäß, repräsentiert der Begrenzungswert einen dritten Schwellenwert zu einer aktuellen Entfernung des Elektrofahrrads von einem Referenzort beziehungsweise Startpunkt, wobei bei einer Überschreitung des dritten Schwellenwerts das Elektrofahrrad abgebremst und/oder ein von einem Fahrer eingegebenes Unterstützungsverhältnis angepasst wird und/oder die Steuerung unabhängig von dem Unterstützungsverhältnis erfolgt. Durch die Steuerung wird beispielsweise nach dem Überschreiten des dritten Schwellenwertes kein Motordrehmoment mehr erzeugt. Mit anderen Worten wird in dieser Ausgestaltung beim Überschreiten einer Entfernung des Elektrofahrrads zu dem Referenzort die erzeugte Unterstützungsleistung durch die Steuerung angepasst, insbesondere wird die Unterstützungsleistung reduziert oder das Elektrofahrrad gebremst. Durch diese bevorzugte Ausgestaltung entsteht der Vorteil, dass beim Überschreiten des dritten Schwellenwertes die Weiterfahrt des Elektrofahrrads erschwert wird, wodurch beispielsweise ein Bewegungsradius von einem Kind auf dem Elektrofahrrad aus Sicherheitsgründen eingeschränkt werden kann.

In einer besonders bevorzugten Ausführung erfolgt die Erfassung des Begrenzungswertes zu einer Betriebsgröße des Elektrofahrrads nur bei einem Stillstand des Elektrofahrrads. Dadurch wird vorteilhafterweise eine für einen Fahrer des Elektrofahrrads gefährliche Erfassung während der Fahrt vermieden.

Vorteilhafterweise erfolgt eine optische Anzeige des erfassten Begrenzungswertes des Elektrofahrrads, insbesondere mittels eines Displays an dem Steuergerät des Elektrofahrrads. Durch diese Ausgestaltung entsteht der Vorteil, dass der Fahrer des Elektrofahrrads über den erfassten Begrenzungswert informiert wird und damit auch Reklamationen des Elektrofahrrads beim Händler wegen eines irrtümlich gesetzten Begrenzungswertes vermieden werden.

In einer Weiterführung der Erfindung kann es vorgesehen sein, eine Erfassung einer aktuellen Geschwindigkeit des Elektrofahrrads und/oder einer aktuellen Beschleunigung des Elektrofahrrads durchzuführen. Anschließend erfolgt eine Anzeige einer akustischen und/oder haptischen und/oder optischen Warnung für den Fahrer in Abhängigkeit der erfassten Geschwindigkeit und/oder der erfassten Beschleunigung und des wenigstens einen erfassten Begrenzungswertes. Alternativ oder zusätzlich erfolgt eine Abbremsung des Elektrofahrrads und/oder eine Erhöhung eines Trittwiderstands an den Pedalen des Elektrofahrrads in Abhängigkeit der erfassten Geschwindigkeit und/oder der erfassten Beschleunigung und in Abhängigkeit des erfassten Begrenzungswertes. Die Abbremsung des Elektrofahrrads und/oder die Erhöhung des Trittwiderstands wird dabei insbesondere mittels des Elektromotors und/oder einer elektrisch ansteuerbaren Bremse durchgeführt. Durch die Weiterführung entsteht der Vorteil, dass der erfasste Begrenzungswert zumindest nicht dauerhaft überschritten werden kann beziehungsweise eine Weiterfahrt mit dem Elektrofahrrad bei einer Überschreitung des Begrenzungswertes erheblich erschwert wird.

Die Erfindung betrifft auch ein Steuergerät für ein Elektrofahrrad. Das Steuergerät ist dazu eingerichtet, das erfindungsgemäße Verfahren durchzuführen.

Die Erfindung betrifft ferner ein Elektrofahrrad, aufweisend den Elektromotor zur motorischen Kraftunterstützung des Fahrers des Elektrofahrrads, wobei das Elektrofahrrad das erfindungsgemäße Steuergerät aufweist.

Die Erfindung betrifft des Weiteren ein Eingabeverfahren zur Begrenzung mindestens einer Betriebsgröße des Elektrofahrrads mittels einer mobilen Recheneinheit. Die mobile Recheneinheit weist wenigstens ein Eingabemittel, eine Anzeigevorrichtung und eine Sendevorrichtung auf. Das Eingabeverfahren umfasst eine Anzeige des mindestens einen Begrenzungswertes mittels der Anzeigevorrichtung, wobei der Begrenzungswert die zu begrenzende Betriebsgröße des Elektrofahrrads repräsentiert. Als Begrenzungswert wird beispielsweise der erste Schwellenwert und/oder der zweite Schwellenwert und/oder der dritte Schwellenwert angezeigt. Anschließend erfolgt eine Erfassung einer Einstelleingabe eines Nutzers mittels des Eingabemittels, wobei die erfasste Einstelleingabe den mindestens einen angezeigten Begrenzungswert repräsentiert. In einem weiteren Schritt erfolgt eine Aussendung des Funksignals, insbesondere eines Bluetooth-Signals oder WLAN-Signals, welches die Einstelleingabe des Nutzers repräsentiert. Das Funksignal ist vorteilhafterweise dazu eingerichtet, von dem Steuergerät des Elektrofahrrads empfangen zu werden, wodurch das erfindungsgemäße Verfahren zur Steuerung des Elektromotors des Elektrofahrrads durchgeführt wird.

Durch das Eingabeverfahren ist vorteilhafterweise eine Einstellung des Begrenzungswerts des Elektrofahrrads komfortabel möglich, beispielsweise mittels eines Smartphones.

Die Erfindung betrifft außerdem eine mobile Recheneinheit, insbesondere ein Smartphone, wobei die mobile Recheneinheit wenigstens ein Eingabemittel, eine Anzeigevorrichtung und eine Sendevorrichtung aufweist. Die mobile Recheneinheit ist darüber hinaus dazu eingerichtet, das erfindungsgemäßes Eingabeverfahren durchzuführen.

Weitere Vorteile ergeben sich aus der nachfolgenden Beschreibung von Ausführungsbeispielen mit Bezug zu den Figuren.

Figur 1: Elektrofahrrad
Figur 2: Ablaufdiagramm des Verfahrens zur Steuerung des Elektromotors
Figur 3: Steuergerät
Figur 4: Diagramm eines resultierenden Drehmomentverlaufs
Figur 5: Ablaufdiagramm des Eingabeverfahrens
Figur 6a: Karte mit Darstellung einer Entfernung von einem Referenzort
Figur 6b: Kartendarstellung einer alternativen Begrenzung der Entfernung Ausführungsbeispiele

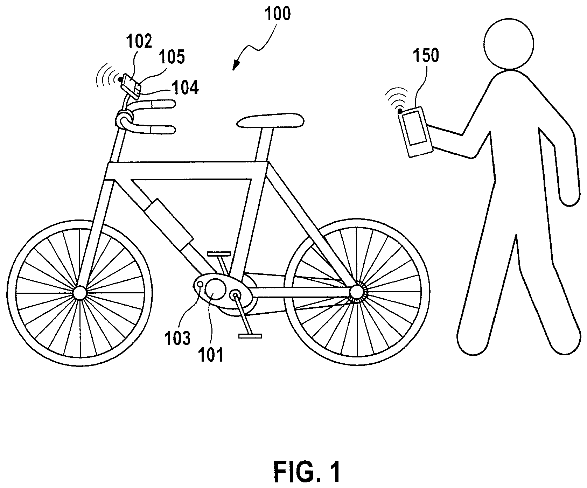

In Figur 1 ist ein Elektrofahrrad 100 mit einem Elektromotor 101 und einem Steuergerät 102 zur Steuerung beziehungsweise Ansteuerung beziehungsweise Regelung des Elektromotors 101 dargestellt. Das Elektrofahrrad 100 weist an der Kurbelwelle, welche mit den Pedalen des Elektrofahrrads 100 verbunden ist, einen Drehmomentsensor zur Erfassung der Trittgröße des Fahrers beziehungsweise des Fahrerdrehmoments auf. Das Steuergerät 102 ist zum Empfang eines Funksignals von einer mobilen Recheneinheit 150 eingerichtet. Das Elektrofahrrad 100, insbesondere das Steuergerät 102, kann eine Sensorvorrichtung 104 umfassen. Die Sensorvorrichtung 104 ist dazu eingerichtet ist, biometrische Daten eines Fahrers des Elektrofahrrads 100 und/oder ein Fahrverhalten des Fahrers zu erkennen und/oder eine Fahrerkategorie des Fahrers zu identifizieren. Zur Erkennung biometrischer Daten des Fahrers weist die Sensorvorrichtung 104 beispielsweise einen Fingerabdrucksensor und/oder eine Kamera zur Augen- und/oder Gesichtserkennung des Fahrers auf. Zur Erkennung des Fahrverhaltens des Fahrers und/oder zur Identifikation einer Fahrerkategorie des Fahrers weist die Sensorvorrichtung 104 vorteilhafterweise mindestens einen Beschleunigungs- oder Drehratensensor auf, insbesondere umfasst das Elektrofahrrad 100 als Sensorvorrichtung 104 eine inertiale Messeinheit mit mehreren Beschleunigungs- und/oder Drehratensensoren. Der mindestens eine Beschleunigungs- oder Drehratensensor der Sensorvorrichtung 104 erfasst eine Drehung beziehungsweise Rollbewegung um die Längsachse des Elektrofahrrads 100 beziehungsweise eine Kippbewegung des Elektrofahrrads 100 in Richtung der Querachse des Elektrofahrrads 100. Bei Überschreitung bestimmter Schwellenwerte für die Drehung beziehungsweise Rollbewegung wird beispielsweise ein unsicheres Fahrverhalten oder ein Kind als Fahrerkategorie erkannt. Das Elektrofahrrad 100 weist ferner ein optionales mechanisches Stellglied 103 auf. Das Elektrofahrrad 100, insbesondere das Steuergerät 102, weist optional eine Eingabevorrichtung 105 auf. Die Eingabevorrichtung 105 ist insbesondere mindestens eine Taste oder ein Touchscreen des Steuergeräts 102 oder einer Kontrolleinheit mit Drucktasten, welche beispielsweise am Lenker des Elektrofahrrads 100 angeordnet ist.

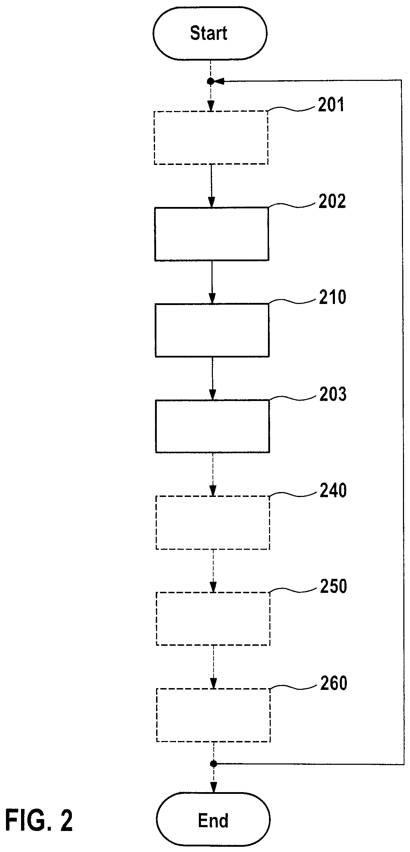

In Figur 2 ist ein Ablaufdiagramm des Verfahrens zur Steuerung eines Elektromotors 101 eines Elektrofahrrads 100 als Blockschaltbild dargestellt. Im Schritt 201 erfolgt eine optionale Erfassung einer Eingabe eines Unterstützungsverhältnisses $\alpha$, wobei das Unterstützungsverhältnisses $\alpha$ vorzugsweise das durch eine Steuerung 203 des Elektromotors 101 zu erzeugende Verhältnis zwischen einem Motordrehmoment M_Motor des Elektromotors 101 und einem Fahrerdrehmoment M_Fahrer des Fahrers gemäß Gleichung (1) repräsentiert. In einem weiteren Schritt 202 erfolgt eine Erfassung einer Trittgröße des Fahrers, wobei insbesondere das Fahrerdrehmoment M_Fahrer des Fahrers an einer Kurbelwelle des Elektrofahrrads 100 erfasst wird, beispielsweise mittels eines Drehmomentsensors im Bereich der Kurbelwelle. Die erfasste Trittgröße wird insbesondere zeitlich gemittelt. In einem Schritt 210 erfolgt eine Erfassung eines Begrenzungswerts zu einer Betriebsgröße des Elektrofahrrads 100 durch eine Auswahleingabe des Fahrers oder einen Empfang eines Funksignals von der mobilen Recheneinheit 150. Der Begrenzungswert ist beispielsweise ein erster Schwellenwert beziehungsweise eine Maximalgeschwindigkeit des Elektrofahrrads 100, bis zu der eine Steuerung 203 in Abhängigkeit des Unterstützungsverhältnisses a erfolgt. Alternativ oder zusätzlich kann der Begrenzungswert einen zweiten Schwellenwert a_max zur Beschleunigung beziehungsweise eine Maximalbeschleunigung des Elektrofahrrads 100 und/oder ein maximales Unterstützungsverhältnis $\alpha$_max des Elektrofahrrads 100 und/oder einen dritten Schwellenwert repräsentieren, wobei der dritte Schwellenwert x_max einer maximale Entfernung des geografischen Standorts A des Elektrofahrrads 100 zu einem Referenzort R beziehungsweise Startpunkt des Elektrofahrrads 100 entspricht. Vorzugsweise erfolgt die Erfassung 210 des Begrenzungswerts des Elektrofahrrads 100 nur bei einem Stillstand des Elektrofahrrads 100. Anschließend erfolgt die Steuerung 203 des Elektromotors 101 in Abhängigkeit der erfassten Trittgröße, insbesondere des Fahrerdrehmoments M_Fahrer, und optional in Abhängigkeit des erfassten Unterstützungsverhältnisses a, wobei vorzugsweise noch weitere bekannte Abhängigkeiten der Steuerung des Elektromotors 101 vorgesehen sein können. Im Schritt 203 wird der Elektromotor 101 erfindungsgemäß zusätzlich in Abhängigkeit des Begrenzungswerts gesteuert. Dadurch wird wenigstens eine Betriebsgröße des Elektrofahrrads 100 begrenzt. Mit anderen Worten kann es beispielsweise vorgesehen sein, dass bei einer Überschreitung des ersten Schwellenwerts die Steuerung 203 des Elektromotors unabhängig von dem erfassten Unterstützungsverhältnis erfolgt, das heißt die Abhängigkeit der Steuerung 203 von dem Unterstützungsverhältnis liegt nur bis zum Überschreiten des ersten, zweiten und/oder dritten Schwellenwertes als Begrenzungswertes vor. Beispielsweise wird der Elektromotor beim Erreichen des ersten Schwellenwerts auf ein konstantes Motordrehmoment M_max gesteuert. In einem optionalen Schritt 240 wird eine Erfassung 240 einer aktuellen Geschwindigkeit des Elektrofahrrads 100 und/oder einer aktuellen Beschleunigung des Elektrofahrrads 100 durchgeführt. Im optionalen Schritt 250 wird der Fahrer akustisch und/oder optisch und/oder haptisch in Abhängigkeit der erfassten Geschwindigkeit und/oder in Abhängigkeit der erfassten Beschleunigung und in Abhängigkeit der erfassten Auswahleingabe und/oder des empfangenen Funksignals beziehungsweise in Abhängigkeit des mindestens einen erfassten Begrenzungswertes, welcher durch die erfasste Auswahleingabe und/oder das empfangene Funksignal repräsentiert wird, gewarnt. Die Warnung 250 erfolgt beispielsweise, wenn die erfasste Geschwindigkeit und/oder die erfasste Beschleunigung den erfassten Begrenzungswert überschreitet. Alternativ oder zusätzlich erfolgt eine Abbremsung 260 des Elektrofahrrads 100 in Abhängigkeit der erfassten Auswahleingabe und/oder des empfangenen Funksignals beziehungsweise in Abhängigkeit des mindestens einen Begrenzungswertes, welcher durch die erfasste Auswahleingabe und/oder das empfangene Funksignal repräsentiert wird. Die Abbremsung 260 des Elektrofahrrads 100 kann zeitlich verzögert erfolgen, beispielsweise nach einer Zeitspanne von 0,5 Sekunden bis 1 Minute, insbesondere beträgt die Zeitspanne zwischen 1 und 5 Sekunden. Die Abbremsung 260 des Elektrofahrrads 100 erfolgt mittels einer elektrisch ansteuerbaren Bremse und/oder mittels einer bremsenden Steuerung 203 beziehungsweise Ansteuerung des Elektromotors 101. Alternativ oder zusätzlich erfolgt eine Abschaltung des Motors oder eine leichte Gegenbestromung, insbesondere durch einen Kurzschluss, um das Treten der Pedale mit der Trittkraft zu erschweren beziehungsweise um eine Erhöhung des Pedalgegendruckes zu erreichen. Ferner kann es vorgesehen sein, das Elektrofahrrad 100 im Schritt 260 bis zum Überschreiten des Begrenzungswertes abzubremsen oder den Pedalgegendruck zu erhöhen. Es kann im Schritt 260 optional eine Vollbremsung des Elektrofahrrads 100 vorgesehen sein, beispielsweise, wenn der Standort des Elektrofahrrads 100 als Begrenzungswert eine vorgegebene Entfernung zu einem Startpunkt des Elektrofahrrads 100 beziehungsweise zu einem Referenzort R des Elektrofahrrads 100 überschreitet.

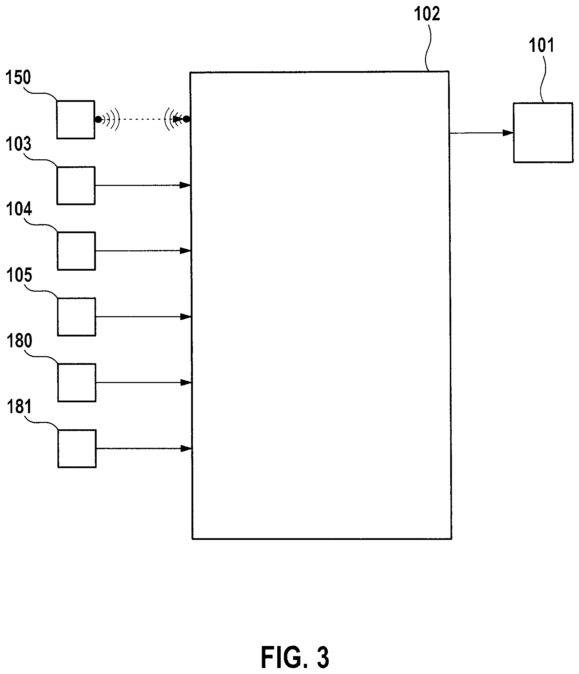

In Figur 3 ist ein Steuergerät 102 dargestellt, welches vorteilhafterweise mindestens eine Recheneinheit und einen elektronischen Speicher aufweist. Das Steuergerät 102 erfasst eine Trittgröße des Fahrers mittels eines Trittgrößensensors 180, insbesondere umfasst der Trittgrößensensor 180 einen Drehmomentsensor, welcher bevorzugt an der Kurbelwelle des Elektrofahrrads 100 angeordnet ist. Optional ist das Steuergerät 102 dazu eingerichtet, eine Eingabe des Fahrers zum Unterstützungsverhältnis α mittels eines Eingabemittels 181 zu erfassen. Das Steuergerät 102 ist auch dazu eingerichtet, das Funksignal von der mobilen Recheneinheit 150 zu erfassen. Ferner ist das Steuergerät 102 dazu eingerichtet, den Begrenzungswert zu erfassen. Die Erfassung 210 des Begrenzungswertes erfolgt durch eine Auswahleingabe mittels des mechanisches Stellglieds 103 und/oder mittels der Eingabevorrichtung 105 und/oder mittels der Sensorvorrichtung 104. Das Eingabemittel 181 und die Eingabevorrichtung 105 werden vorteilhafterweise zu einer Komponente zusammengefasst beziehungsweise deren Funktion wird mittels einer Komponente realisiert. Das Steuergerät 102 ist dazu eingerichtet, den Elektromotor 101 des Elektrofahrrads 100 in Abhängigkeit der erfassten Trittgröße und des optional erfassten Unterstützungsverhältnisses a zu steuern. Das Steuergerät 102 ist darüber hinaus erfindungsgemäß dazu eingerichtet, den Elektromotor des Elektrofahrrads 100 in Abhängigkeit des erfassten Begrenzungswertes zu steuern, so dass eine Betriebsgröße des Elektrofahrrads 100 begrenzt wird.

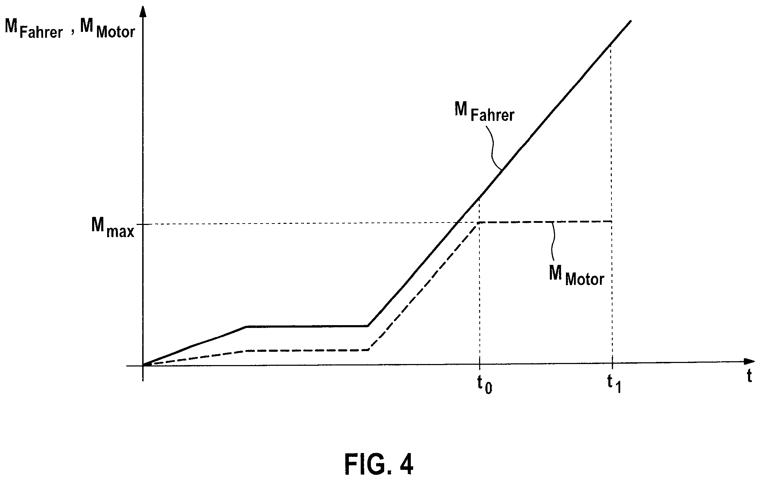

Figur 4 zeigt ein vereinfachtes Diagramm eines durch das Steuerungsverfahren resultierenden Motordrehmomentverlaufs M_Motor des Elektromotors 101. Das mit einer durchgezogenen Linie dargestellte Fahrerdrehmoment M_Fahrer des Fahrers und das mit einer gestrichelten Linie dargestellte Motordrehmoment M_Motor des Elektromotors 101 zeigen bis zu einem ersten Schwellenwert zum Zeitpunkt t0 eine im Wesentlichen lineare Abhängigkeit vom erfassten Unterstützungsverhältnis a nach Gleichung (1), wobei die Darstellung des Motordrehmomentverlaufs M_Motor und des Fahrerdrehmoment M_Fahrer in Figur 4 vereinfacht beziehungsweise geglättet beziehungsweise gemittelt wurde. Mit anderen Worten kommt es in der Praxis zu Schwankungen des Fahrerdrehmoments M_Fahrer während einer Pedalumdrehung und/oder über eine gewisse Zeitspanne und/oder beispielsweise aufgrund eines Wechsels eines Übersetzungsverhältnisses einer Gangschaltung zu Drehmomentsprüngen des Fahrerdrehmoments M_Fahrer oder des Motordrehmoments M_Motor, wobei diese Unregelmäßigkeiten in Figur 4 zur Vereinfachung der Darstellung nicht gezeigt sind. Bis zum Erreichen des Zeitpunkts t0 wird die Steuerung 203 in Abhängigkeit des Unterstützungsverhältnisses a durchgeführt. Nach dem Erreichen beziehungsweise Überschreiten des ersten Schwellenwertes als Begrenzungswert, bis zu der die Steuerung 203 in Abhängigkeit des Unterstützungsverhältnisses α erfolgt, weicht das Verhältnis zwischen dem Motordrehmoment M_Motor und dem Fahrerdrehmoment M_Fahrer von dem erfassten Unterstützungsverhältnis α ab, wobei der Elektromotor 101 in diesem Ausführungsbeispiel unabhängig von dem Unterstützungsverhältnis ein konstantes Motordrehmoment M_max erzeugt. Die gesetzlich vorgegebene maximale Geschwindigkeit v_gesetzlich mit motorischer Unterstützung wird zum Zeitpunkt t1 erreicht. Bei Geschwindigkeiten des Elektrofahrrads oberhalb von der gesetzlich vorgegebenen maximalen Geschwindigkeit v_gesetzlich wird das Motordrehmoment M_Motor auf Null reduziert. Die gesetzlich vorgegebene maximale Geschwindigkeit v_gesetzlich liegt oberhalb des ersten Schwellenwertes v_max.

Es kann in einer alternativen Ausgestaltung der Erfindung vorgesehen sein, dass nach der Überschreitung der ersten Schwellenwertes keine motorische Unterstützung des Fahrerdrehmoments mehr erfolgt (nicht gezeigt) oder das Elektrofahrrad abgebremst wird. Mit anderen Worten repräsentiert der erste Schwellenwert als Begrenzungswert in dieser nicht dargestellten alternativen Ausgestaltung die Geschwindigkeit, bis zu welcher das Elektrofahrrad mittels des Elektromotors unterstützt wird.

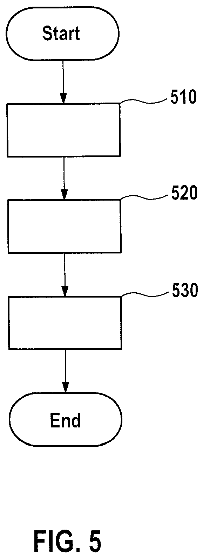

Figur 5 offenbart ein Ablaufdiagramm des Eingabeverfahrens zur Begrenzung mindestens einer Betriebseigenschaft des Elektrofahrrads 100 mittels einer mobilen Recheneinheit 150 als Blockschaltbild. Die mobile Recheneinheit 150 weist eine Anzeigevorrichtung 151, ein Eingabemittel 152 sowie eine Sendevorrichtung 153 auf. Im Schritt 510 erfolgt eine Anzeige mindestens eines Begrenzungswertes mittels der Anzeigevorrichtung 151, wobei der Begrenzungswert wenigstens eine zu begrenzende Betriebseigenschaft des Elektrofahrrads 100 repräsentiert, insbesondere wird als Begrenzungswert der erster Schwellenwert zur Geschwindigkeit des Elektrofahrrads 100, bis zu der die Steuerung 203 eines Elektromotors 101 des Elektrofahrrads 100 in Abhängigkeit des Unterstützungsverhältnisses α erfolgt, und/oder der zweite Schwellenwert zur Beschleunigung des Elektrofahrrads 100 und/oder das maximale Unterstützungsverhältnis des Elektrofahrrads 100 und/oder der dritte Schwellenwert zur Entfernung des Elektrofahrrads 100 von einem aktuellen geografischen Referenzort angezeigt. Anschließend erfolgt eine Erfassung 520 einer Einstelleingabe eines Nutzers mittels des Eingabemittels 152, wobei die erfasste Einstelleingabe den Begrenzungswert repräsentiert. Danach wird im Schritt 530 das Funksignal ausgesendet, welches die Einstelleingabe des Nutzers repräsentiert. Das Funksignal ist dazu eingerichtet, die Einstelleingabe des Nutzers an das Steuergerät 102 des Elektrofahrrads 100 zu übertragen. Das Eingabeverfahren läuft beispielsweise als App beziehungsweise Software auf einem Smartphone, wobei das Funksignal vorzugsweise dem Bluetooth-Standard entspricht.

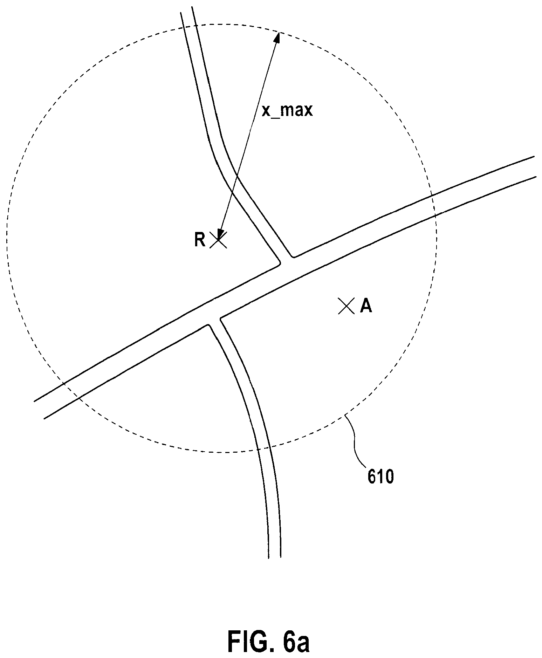

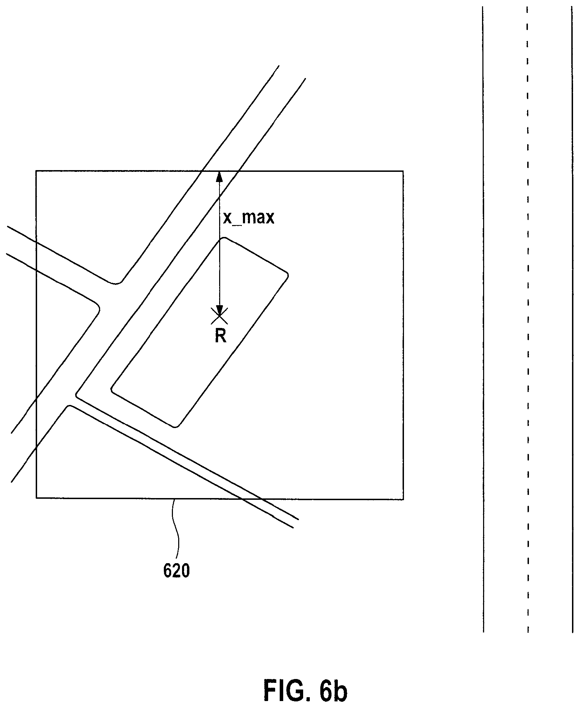

Figur 6a stellt eine Karte mit einer kreisförmigen Begrenzung 610 einer maximalen Entfernung x_max des aktuellen geografischen Standorts A des Elektrofahrrads 100 zu einem Referenzort R des Elektrofahrrads 100 dar. Figur 6b stellt eine Karte mit einer alternativen rechteckförmigen Begrenzung 620 der maximalen Entfernung x_max des aktuellen geografischen Standorts A des Elektrofahrrads 100 zu einem Referenzort R des Elektrofahrrads 100 dar. Außerhalb der gezeigten Begrenzung 610 oder 620 wird das Elektrofahrrad beispielsweise nicht mehr motorisch unterstützt. Es kann vorgesehen sein, das Elektrofahrrad 100 außerhalb der Begrenzung 610 oder 620 auf eine in einem Speicher hinterlegte vorgegebene oder einstellbare Geschwindigkeit oder bis zum Stillstand abzubremsen. Zur Erfassung des Begrenzungswertes beziehungsweise des dritten Schwellenwerts kann es beispielsweise vorgesehen sein, dass ein Nutzer des Eingabeverfahrens die Begrenzung 610 oder 620, welche beispielsweise einer Karte überlagert auf einem Display angezeigt werden, mittels Verschieben einstellt.

## Patentansprüche

1.  Verfahren zur Steuerung eines Elektromotors (101) eines Elektrofahrrads zur Erzeugung einer motorischen Unterstützungsleistung zum Antrieb des Elektrofahrrads (100), umfassend die folgenden Verfahrensschritte

    • Erfassung (202) einer Trittgröße des Fahrers, insbesondere eines Fahrerdrehmoments (M_Fahrer) an einer Kurbelwelle des Elektrofahrrads (100), und
    • Steuerung (203) des Elektromotors (101) in Abhängigkeit der erfassten Trittgröße (M_Fahrer) zur Erzeugung der Unterstützungsleistung,

    **dadurch gekennzeichnet, dass** die folgenden Schritte durchgeführt werden

    • Erfassung (210) eines Begrenzungswertes zu einer Betriebsgröße des Elektrofahrrads durch eine Auswahleingabe des Fahrers oder einen Empfang eines Funksignals von einer mobilen Recheneinheit (150), wobei der Begrenzungswert einen dritten Schwellenwert (x_max) zu einer aktuellen Entfernung (x) des Elektrofahrrads (100) von einem Referenzort (R) beziehungsweise Startpunkt repräsentiert, und
    • Steuerung (203) des Elektromotors (101) zusätzlich in Abhängigkeit des erfassten Begrenzungswertes, wobei die erzeugte Unterstützungsleistung beim Überschreiten des Begrenzungswertes begrenzt oder reduziert wird, wobei bei einer Überschreitung des dritten Schwellenwerts (x_max) das Elektrofahrrad (100) abgebremst und/oder ein von einem Fahrer eingegebenes Unterstützungsverhältnis (α) angepasst wird und/oder die Steuerung (203) unabhängig vom Unterstützungsverhältnis (α) erfolgt.

2. Verfahren nach Anspruch 1, **dadurch gekennzeichnet, dass** die Erfassung des Begrenzungswertes

i. mittels einer Sensorvorrichtung (104) erfolgt, wobei die Sensorvorrichtung (104) dazu eingerichtet ist, biometrische Daten des Fahrers und/oder ein Fahrverhalten des Fahrers zu erkennen und/oder eine Fahrerkategorie des Fahrers zu identifizieren, und/oder
ii. mittels eines mechanischen Stellgliedes (103) erfolgt, und/oder
iii. mittels einer Eingabevorrichtung (105) am Elektrofahrrad (100) erfolgt.

3. Verfahren nach einem der vorhergehenden Ansprüche, **dadurch gekennzeichnet, dass** der Begrenzungswert einen ersten Schwellenwert (v_max) zu einer aktuellen Geschwindigkeit des Elektrofahrrads (100) repräsentiert, wobei bei einer Überschreitung des ersten Schwellenwerts (v_max) ein von einem Fahrer eingegebenes Unterstützungsverhältnis (α) angepasst wird oder die Steuerung (203) unabhängig vom Unterstützungsverhältnis (α) erfolgt.

4. Verfahren nach einem der vorhergehenden Ansprüche, **dadurch gekennzeichnet, dass** der Begrenzungswert einen zweiten Schwellenwert (a_max) zu einer aktuellen Beschleunigung des Elektrofahrrads (100) repräsentiert, wobei bei einer Überschreitung des zweiten Schwellenwerts (v_max) ein von einem Fahrer eingegebenes Unterstützungsverhältnis (α) angepasst wird oder die Steuerung (203) unabhängig vom Unterstützungsverhältnis (α) erfolgt.

5. Verfahren nach einem der vorhergehenden Ansprüche, **dadurch gekennzeichnet, dass** die Erfassung (210) des Begrenzungswertes zu einer Betriebsgröße des Elektrofahrrads nur bei einem Stillstand des Elektrofahrrads (100) erfolgt.

6. Verfahren nach einem der vorhergehenden Ansprüche, **dadurch gekennzeichnet, dass** die folgenden Schritte durchgeführt werden

• Erfassung (240) einer aktuellen Geschwindigkeit des Elektrofahrrads (100) und/oder einer aktuellen Beschleunigung des Elektrofahrrads (100), und
• Anzeige (250) einer akustischen und/oder optischen und/oder haptischen Warnung für den Fahrer in Abhängigkeit der erfassten Geschwindigkeit und/oder der erfassten Beschleunigung und in Abhängigkeit des erfassten Begrenzungswertes, und/oder
• Abbremsung (260) des Elektrofahrrads (100) und/oder Erhöhung eines Trittwiderstands an den Pedalen des Elektrofahrrads (100) in Abhängigkeit der erfassten Geschwindigkeit und/oder der erfassten Beschleunigung und in Abhängigkeit des erfassten Begrenzungswertes.

7. Steuergerät (102) für ein Elektrofahrrad (100), wobei das Steuergerät (102) dazu eingerichtet ist, ein Verfahren zur Erzeugung einer motorischen Unterstützungsleistung für einen Antrieb des Elektrofahrrads (100) nach einem der Ansprüche 1 bis 6 durchzuführen.

8. Elektrofahrrad (100), aufweisend einen Elektromotor (101) zur Erzeugung einer motorischen Unterstützungsleistung für einen Antrieb des Elektrofahrrads (100), wobei das Elektrofahrrad (100) ein Steuergerät (102) nach Anspruch 7 aufweist.

9. Eingabeverfahren zur Begrenzung mindestens einer Betriebsgröße eines Elektrofahrrads (100) mittels einer mobilen Recheneinheit (150), wobei die mobile Recheneinheit (150) wenigstens ein Eingabemittel (151), eine Anzeigevorrichtung (152) und eine Sendevorrichtung (153) aufweist, umfassend die folgenden Verfahrensschritte

• Anzeige (510) eines dritten Schwellenwerts als Begrenzungswert mittels der Anzeigevorrichtung (151), wobei der Begrenzungswert eine zu begrenzende Betriebsgröße des Elektrofahrrads (100) repräsentiert, wobei der dritte Schwellenwert (x_max) einen Begrenzungswert zu einer aktuellen Entfernung (x) des Elektrofahrrads (100) von einem Referenzort (R) beziehungsweise Startpunkt repräsentiert,
• Erfassung (520) einer Einstelleingabe eines Nutzers mittels des Eingabemittels (152), wobei die erfasste Einstelleingabe den Begrenzungswert repräsentiert, und

• Aussendung (530) eines Funksignals, welches die Einstelleingabe des Nutzers repräsentiert, wobei das Funksignal dazu eingerichtet ist, von einem Steuergerät des Elektrofahrrads nach Anspruch 7 empfangen zu werden, wodurch ein Verfahren zur Steuerung des Elektromotors des Elektrofahrrads nach einem der Ansprüche 1 bis 6 durchgeführt wird.

10. Mobile Recheneinheit (150), wobei die mobile Recheneinheit (150) wenigstens ein Eingabemittel (151), eine Anzeigevorrichtung (152) und eine Sendevorrichtung (153) aufweist, und wobei die mobile Recheneinheit (150) dazu eingerichtet ist, ein Eingabeverfahren nach Anspruch 9 durchzuführen.

**Claims**

1. Method for controlling an electric motor (101) of an electric bicycle for generating a motor support power for driving the electric bicycle (100), comprising the following method steps

   • detection (202) of a pedalling variable of the rider, in particular a rider torque (M_Fahrer) on a crankshaft of the electric bicycle (100), and
   • control (203) of the electric motor (101) depending on the detected pedalling variable (M_Fahrer) to generate the support power,

   **characterized in that** the following steps are performed

   • detection (210) of a limiting value for an operating variable of the electric bicycle by a selection input of the rider or reception of a radio signal from a mobile computing unit (150), wherein the limiting value represents a third threshold value (x_max) for a current distance (x) between the electric bicycle (100) and a reference location (R) or starting point, and
   • control (203) of the electric motor (101) additionally depending on the detected limiting value, wherein the generated support power is limited or reduced if the limiting value is exceeded, wherein, if the third threshold value (x_max) is exceeded, the electric bicycle (100) is braked and/or a support ratio ($\alpha$) entered by a rider is adjusted and/or the control (203) is performed independently of the support ratio ($\alpha$).

2. Method according to Claim 1, **characterized in that** the limiting value is detected

   i. by means of a sensor device (104), wherein the sensor device (104) is configured to recognize biometric data of the rider and/or a riding behaviour of the rider and/or to identify a rider category of the rider, and/or
   ii. by means of a mechanical actuator (103), and/or
   iii. by means of an input device (105) on the electric bicycle (100).

3. Method according to either one of the preceding claims, **characterized in that** the limiting value represents a first threshold value (v_max) for a current velocity of the electric bicycle (100), wherein, if the first threshold value (v_max) is exceeded, a support ratio ($\alpha$) entered by a rider is adjusted or the control (203) is performed independently of the support ratio ($\alpha$).

4. Method according to any one of the preceding claims, **characterized in that** the limiting value represents a second threshold value (a_max) for a current acceleration of the electric bicycle (100), wherein, if the second threshold value (v_max) is exceeded, a support ratio ($\alpha$) entered by a rider is adjusted or the control (203) is performed independently of the support ratio ($\alpha$).

5. Method according to any one of the preceding claims, **characterized in that** the limiting value for an operating variable of the electric bicycle is detected (210) only when the electric bicycle (100) is at a standstill.

6. Method according to any one of the preceding claims, **characterized in that** the following steps are carried out

   • detection (240) of a current velocity of the electric bicycle (100) and/or a current acceleration of the electric bicycle (100), and
   • display (250) of an audible and/or visual and/or haptic warning to the rider depending on the detected velocity and/or the detected acceleration and depending on the detected limiting value, and/or

• braking (260) of the electric bicycle (100) and/or increase of the pedalling resistance on the pedals of the electric bicycle (100) depending on the detected velocity and/or the detected acceleration and depending on the detected limiting value.

7.  Control unit (102) for an electric bicycle (100), wherein the control unit (102) is configured to carry out a method for generating a motor support power for a drive of the electric bicycle (100) according to any one of Claims 1 to 6.

8.  Electric bicycle (100), comprising an electric motor (101) for generating a motor support power for a drive of the electric bicycle (100), wherein the electric bicycle (100) has a control unit (102) according to Claim 7.

9.  Input method for limiting at least one operating variable of an electric bicycle (100) by means of a mobile computing unit (150), wherein the mobile computing unit (150) has at least one input means (151), a display device (152) and a transmission device (153), comprising the following method steps

> • display (510) of a third threshold value as a limiting value by means of the display device (151), wherein the limiting value represents an operating variable of the electric bicycle (100) to be limited, wherein the third threshold value (x_max) represents a limiting value for a current distance (x) between the electric bicycle (100) and a reference location (R) or starting point,
> • detection (520) of a setting input from a user by means of the input means (152), wherein the detected setting input represents the limiting value, and
> • transmission (530) of a radio signal, which represents the setting input of the user, wherein the radio signal is configured to be received by a control unit of the electric bicycle according to Claim 7, as a result of which a method for controlling the electric motor of the electric bicycle according to any one of Claims 1 to 6 is carried out.

10. Mobile computing unit (150), wherein the mobile computing unit (150) has at least one input means (151), a display device (152) and a transmission device (153), and wherein the mobile computing unit (150) is configured to carry out an input method according to Claim 9.

## Revendications

1.  Procédé de commande d'un moteur électrique (101) d'une bicyclette électrique pour générer une puissance d'assistance motorisée afin d'entraîner la bicyclette électrique (100), comprenant les étapes suivantes, consistant à

> • détecter (202) une grandeur de pédalage du cycliste, en particulier un couple de cycliste (M_Fahrer) au niveau d'un arbre de pédalier de la bicyclette électrique (100), et
> • commander (203) le moteur électrique (101) en fonction de la grandeur de pédalage (M_Fahrer) détectée pour générer la puissance d'assistance,

> caractérisé en ce que les étapes suivantes sont exécutées, consistant à

> • détecter (210) une valeur limite pour une grandeur de fonctionnement de la bicyclette électrique par une entrée de sélection du cycliste ou une réception d'un signal radio provenant d'une unité de calcul mobile (150), la valeur limite représentant une troisième valeur de seuil (x_max) pour une distance actuelle (x) de la bicyclette électrique (100) par rapport à un emplacement de référence (R) ou respectivement à un point de départ, et
> • commander (203) le moteur électrique (101) en outre en fonction de la valeur limite détectée, la puissance d'assistance générée étant limitée ou réduite en cas de dépassement de la valeur limite, la bicyclette électrique (100) étant freinée et/ou un rapport d'assistance (α) saisi par le cycliste étant adapté et/ou la commande (203) s'effectuant indépendamment du rapport d'assistance (α) en cas de dépassement de la troisième valeur de seuil (x_max).

2.  Procédé selon la revendication 1, caractérisé en ce que la détection de la valeur limite s'effectue

> i. au moyen d'un dispositif de détection (104), le dispositif de détection (104) étant conçu pour reconnaître des données biométriques du cycliste et/ou un comportement de conduite du cycliste et/ou pour identifier une catégorie de cycliste du cycliste, et/ou
> ii. au moyen d'un actionneur mécanique (103), et/ou

iii. au moyen d'un dispositif d'entrée (105) sur la bicyclette électrique (100).

3. Procédé selon l'une quelconque des revendications précédentes, **caractérisé en ce que** la valeur limite représente une première valeur de seuil (v_max) pour une vitesse actuelle de la bicyclette électrique (100), un rapport d'assistance ($\alpha$) saisi par un cycliste étant adapté ou la commande (203) s'effectuant indépendamment du rapport d'assistance ($\alpha$) en cas de dépassement de la première valeur de seuil (v_max).

4. Procédé selon l'une quelconque des revendications précédentes, **caractérisé en ce que** la valeur limite représente une deuxième valeur de seuil (a_max) pour une accélération actuelle de la bicyclette électrique (100), un rapport d'assistance ($\alpha$) saisi par le cycliste étant adapté ou la commande (203) s'effectuant indépendamment du rapport d'assistance ($\alpha$) en cas de dépassement de la deuxième valeur de seuil (v_max).

5. Procédé selon l'une quelconque des revendications précédentes, **caractérisé en ce que** la détection (210) de la valeur limite pour une grandeur de fonctionnement de la bicyclette électrique ne s'effectue qu'à l'arrêt de la bicyclette électrique (100).

6. Procédé selon l'une quelconque des revendications précédentes, **caractérisé en ce que** les étapes suivantes sont exécutées, consistant à

   • détecter (240) une vitesse actuelle de la bicyclette électrique (100) et/ou une accélération actuelle de la bicyclette électrique (100), et
   • afficher (250) un avertissement acoustique et/ou optique et/ou haptique pour le cycliste en fonction de la vitesse détectée et/ou de l'accélération détectée et en fonction de la valeur limite détectée, et/ou
   • freiner (260) la bicyclette électrique (100) et/ou augmenter une résistance au pédalage au niveau des pédales de la bicyclette électrique (100) en fonction de la vitesse détectée et/ou de l'accélération détectée et en fonction de la valeur limite détectée.

7. Appareil de commande (102) pour une bicyclette électrique (100), l'appareil de commande (102) étant conçu pour mettre en œuvre un procédé pour générer une puissance d'assistance motorisée pour un entraînement de la bicyclette électrique (100) selon l'une quelconque des revendications 1 à 6.

8. Bicyclette électrique (100) comportant un moteur électrique (101) pour générer une puissance d'assistance motorisée pour un entraînement de la bicyclette électrique (100), la bicyclette électrique (100) comportant un appareil de commande (102) selon la revendication 7.

9. Procédé de saisie destiné à limiter au moins une grandeur de fonctionnement d'une bicyclette électrique (100) au moyen d'une unité de calcul mobile (150), l'unité de calcul mobile (150) comportant au moins un moyen d'entrée (151), un dispositif d'affichage (152) et un dispositif d'émission (153), comprenant les étapes suivantes, consistant à

   • afficher (510) une troisième valeur de seuil comme valeur limite au moyen du dispositif d'affichage (151), la valeur limite représentant une grandeur de fonctionnement à limiter de la bicyclette électrique (100), la troisième valeur de seuil (x_max) représentant une valeur limite pour une distance actuelle (x) de la bicyclette électrique (100) par rapport à un emplacement de référence (R) ou respectivement à un point de départ,
   • détecter (520) une saisie de réglage d'un utilisateur au moyen du moyen d'entrée (152), la saisie de réglage détectée représentant la valeur limite, et
   • émettre (530) un signal radio qui représente la saisie de réglage de l'utilisateur, le signal radio étant conçu pour être reçu par un appareil de commande de la bicyclette électrique selon la revendication 7, moyen quoi un procédé de commande du moteur électrique de la bicyclette électrique selon l'une quelconque des revendications 1 à 6 est mis en œuvre.

10. Unité de calcul mobile (150), l'unité de calcul mobile (150) comportant au moins un moyen d'entrée (151), un dispositif d'affichage (152) et un dispositif d'émission (153), et l'unité de calcul mobile (150) étant conçue pour mettre en œuvre un procédé d'entrée selon la revendication 9.

FIG. 1

FIG. 2

FIG. 3

FIG. 4

FIG. 5

FIG. 6a

**FIG. 6b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1295785 A1